**Europäisches Patentamt**

**European Patent Office**

**Office européen des brevets**

(19)

(11) Veröffentlichungsnummer : **0 167 794**
**B1**

(12) **EUROPÄISCHE PATENTSCHRIFT**

(45) Veröffentlichungstag der Patentschrift :
17.08.88

(51) Int. Cl.⁴ : **F 02 B 27/02**

(21) Anmeldenummer : **85106780.1**

(22) Anmeldetag : **01.06.85**

(54) **Luftansauganlage einer Mehrzylinder-Brennkraftmaschine.**

(30) Priorität : **03.07.84 DE 3424433**

(43) Veröffentlichungstag der Anmeldung :
**15.01.86 Patentblatt 86/03**

(45) Bekanntmachung des Hinweises auf die Patenterteilung : **17.08.88 Patentblatt 88/33**

(84) Benannte Vertragsstaaten :
**DE FR GB IT SE**

(56) Entgegenhaltungen :
**WO-A-82 /017 42**
**GB-A- 2 079 370**
**GB-A- 2 117 043**
**GB-A- 2 138 071**
**PATENTS ABSTRACTS OF JAPAN, Band 5, Nr. 193**
**(M-101) [865], 9. Dezember 1981 ; & JP - A - 56 115 818**
**(NISSAN DIESEL KOGYO K.K.) 11-09-1981**
**PATENTS ABSTRACTS OF JAPAN, Band 8, Nr. 143**
**(M-306) [1580], 4. July 1984 ; & JP - A - 59 39 926 (HINO**
**JIDOSHA KOGYO K.K.) 05-03-1984**
**Die Akte enthält technische Angaben, die nach dem**
**Eingang der Anmeldung eingereicht wurden und die**
**nicht in dieser Patentschrift enthalten sind.**

(73) Patentinhaber : **Dr.Ing.h.c. F. Porsche Aktiengesells-**
**chaft**
**Porschestrasse 42**
**D-7000 Stuttgart 40 (DE)**

(72) Erfinder : **Theilemann, Ludwig, Dr. Ing.**
**Schubertstrasse 12**
**D-7030 Böblingen 4 (DE)**

## Beschreibung

Die Erfindung betrifft eine Luftansauganlage einer Mehrzylinder-Brennkraftmaschine nach dem Oberbegriff des Anspruchs 1.

Ein solches, in EP-A-0 158 008 (Stand der Technik gemäss Art. 54 (3) EPÜ) beschriebenes gasdynamisches Schwingsystem weist eine bestimmte Eigenschwingungszahl auf, die durch die Volumina der Resonanzbehälter sowie durch den Querschnitt und die Länge des Verbindungsrohres festgelegt ist. Wenn diese Eigenschwingungszahl mit der Frequenz der diskontinuierlichen, instationären Saugströmung der Zylinder annähernd übereinstimmt, tritt Resonanz auf. Die von der, Saugwirkung der Zylinder erregten Gasschwingungen werden verstärkt und bewirken einen Aufladeeffekt der Zylinder, der zu einem besseren Füllungsgrad und damit zu einer Steigerung des Drehmoments und der Leistung führt. Nachteilig ist hierbei, daß eine solche Luftansauganlage jeweils an das Zylinder-Hubvolumen und den gewünschten Drehmomentverlauf der Brennkraftmaschine angepaßt werden muß, wodurch sich eine Vielzahl von Größenausführungen ergibt.

Es ist die Aufgabe der Erfindung, durch eine besondere Gestaltung einer derartigen Luftansauganlage sie für unterschiedliche Brennkraftmaschinen brauchbar zu machen und einen optimalen Drehmomentverlauf über der Drehzahl zu erzielen.

Zur Lösung dieser Aufgabe dienen die kennzeichnenden Merkmale des Anspruchs 1. Wird der Durchflußquerschnitt von einem zum anderen Resonanzbehälter vergrößert, so steigt die Eigenschwingungszahl an ; die Resonanzstelle und die Drehmomentüberhöhung kann in einen höheren Drehzahlbereich verlegt werden. Kontinuierlich läßt sich diese Vergrößerung nur sehr schwer bewerkstelligen, da der Verbindungsquerschnitt über die ganze Länge von dem einen zum anderen Resonanzbehälter konstant sein muß, um die Schwingungsform mit mittlerem Schwingungsknoten nicht nachteilig zu beeinflussen. Es werden deshalb ein oder mehrere Bypassrohre parallel zum Verbindungsrohr verlegt, deren Luftdurchtrittsflächen durch Drosselklappen oder Ventilkörper steuerbar sind.

Die Drosselklappen sind hierbei so angeordnet, daß bei deren Öffnen oder Schließen neben der Veränderung des resonanzwirksamen Verbindungsquerschnittes auch das Gesamtvolumen der Luftansauganlage verändert wird. Diese Maßnahme gestattet es auch, das sogenannte Leerlaufsägen bei Einspritzbrennkraftmaschinen zu vermindern, das durch periodische Drehzahlschwankungen der Brennkraftmaschine zustandekommt. Die Ursache hierfür ist, daß die tatsächlich vom Motor am Einlaßventil angesaugte Luftmenge im instationären Zustand nicht identisch ist mit der vom Luftmengenmesser der Einspritzanlage gemessenen Luftmenge. Denn infolge dynamischer Effekte wird die der angesaugten Luftmenge entsprechende Druckänderung im Saugrohr nur mit einer Phasenverschiebung in eine Änderung des Volumenstroms am Luftmengenmesser umgesetzt. Der Luftmengenmesser kann daher kein zeitlich richtig zugeordnetes Signal zur Bildung der gewünschten Gemischzusammensetzung liefern. Das ganze Ansaug- und Einspritzsystem wird instabil und schaukelt sich bei Leerlauf der Brennkraftmaschine zu erheblichen Drehzahlschwankungen auf, deren Amplitude um so größer ist, je größer das Verhältnis des Gesamtvolumens der Luftansauganlage zum Hubvolumen der Zylinder ist. Gemäß einer weiteren Ausgestaltung der Erfindung wird daher bei Leerlauf und im unteren Drehzahlbereich das Volumen der Luftansauganlage durch Abschalten des Verbindungsrohres und eines Bypassrohres auf ein Mindestmaß reduziert.

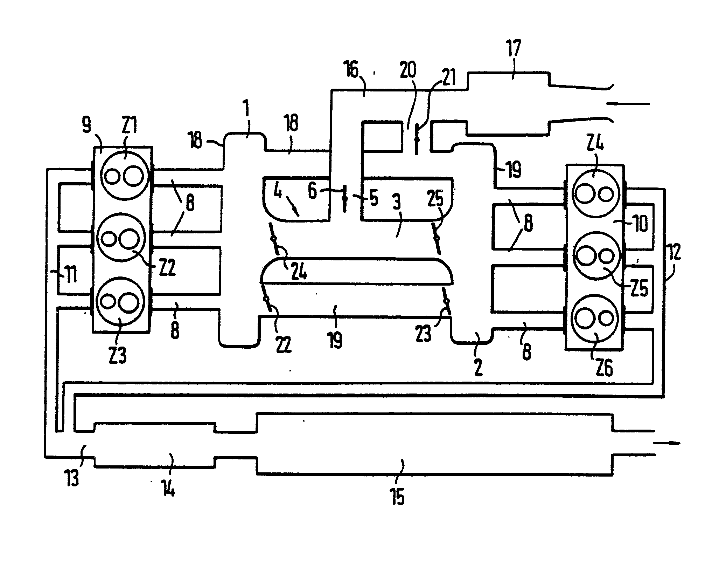

Ein Ausführungsbeispiel der Erfindung ist in der Zeichnung dargestellt und wird nachfolgend erläutert.

Aus einem Resonanzbehälter 1, einem Resonanzbehälter 2 und einem Verbindungsrohr 3 ist ein I-förmiges Verteilerstück 4 gebildet ; senkrecht an das Verbindungsrohr 3 ist ein Saugstutzen 5 angeschlossen, der eine Drosselklappe 6 enthält. Von den Resonanzbehältern 1 und 2 gehen je drei Saugrohre 8 aus, die parallel zum Verbindungsrohr 3 liegen und sich von den Resonanzbehältern zu den Einlaßkanälen der beiden, aus je drei Zylindern bestehenden Zylindergruppen 9, 10 hin konisch verengen. Die eine Zylindergruppe 9 umfaßt die Zylinder Z1, Z2, Z3, die andere Zylindergruppe 10 die Zylinder Z4, Z5, Z6.

Die Abgase der beiden Zylindergruppen 9, 10 sind über Abgassammelrohre 11, 12 einer Abgasleitung 13 zugeführt und gelangen nach Durchströmen eines Vorschalldämpfers 14 und eines Hauptschalldämpfers 15 ins Freie. Der Saugstutzen 5 ist über eine Saugleitung 16 mit einem Luftfilter 17 verbunden, durch das hindurch die Luft aus der Atmosphäre angesaugt wird.

Parallel zum Verbindungsrohr 3 ist zwischen den Resonanzbehältern 1 und 2 ein Bypassrohr 18 und ein Bypassrohr 19 verlegt. Das eine Bypassrohr 18 ist durch einen Saugstutzen 20, der eine Drosselklappe 21 enthält, an das Luftfilter 17 angeschlossen. Am anderen Bypassrohr 19 und am Verbindungsrohr 3 sind Drosselklappen 22 und 23 bzw. 24 und 25 an den Einmündungsstellen zu den Resonanzbehältern 1 und 2 angeordnet. Die Luftzufuhr wird über die Drosselklappen der Saugstutzen, die mit Registersteuerung betätigt werden, geregelt.

Bei Leerlauf und im unteren Drehzahlbereich der Brennkraftmaschine, bis zu einer Drehzahl von ca. 3 500/min. sind die Drosselklappen 22, 23 sowie 24 und 25 geschlossen. Es wird deshalb lediglich über das Bypassrohr 18 Luft angesaugt, wobei nacheinander die Zylinder Z1, Z6, Z2, Z4, Z5, Z3 entsprechend ihrer Zündfolge über das ihnen zugeordnete Saugrohr Luft aus den Resonanzbehältern ansaugen. Hierbei ergibt sich eine annähernd diagonale Durchströmung des Verteilerstücks, die sich in den jeweiligen Saugrohren fortsetzt. Ab einer Drehzahl von ca. 3 500/min. wird durch Öffnen der Drosselklappe 6 im Saugstutzen 5 und der Drosselklappen 24, 25 das Verbindungsrohr 3 zugeschaltet. Die Drosselklappen 22, 23 des zweiten Bypassrohres 19 werden erst bei Vollast, ab einer Drehzahl von ca. 5 700/min. geöffnet.

### Patentansprüche

1. Luftansauganlage zwischen den beiden Zylinderreihen einer Mehrzylinder-Brennkraftmaschine, mit einem l-fömigen, zur Schwingaufladung abgestimmten Verteilerstück (4), aus zwei Resonanzbehältern (1, 2) und einem Verbindungsrohr (3), wobei von den Resonanzbehältern Einzelsaugrohre (8) zu den Zylindern ausgehen und in das Verbindungsrohr (3) senkrecht und annähernd mittig ein durch eine Drosselklappe (6) steuerbarer Saugstutzen (5) einmündet, dadurch gekennzeichnet, daß zum Verbindungsrohr (3) strömungsmäßig parallel liegend mindestens ein die Resonanzbehälter (1, 2) verbindendes Bypaßrohr (19) verlegt ist, dessen Durchflußquerschnitt während des Betriebs der Brennkraftmaschine veränderbar ist.

2. Luftansauganlage nach Anspruch 1, dadurch gekennzeichnet, daß mindestens eines der Bypassrohre im Querschnitt kleiner ist als das Verbindungsrohr (3).

3. Luftansauganlage nach Anspruch 1, dadurch gekennzeichnet, daß das eine Bypassrohr (18) einen durch eine Drosselklappe (21) steuerbaren Saugstutzen (20) aufweist, über den parallel zum Saugstutzen (5) des Verbindungsrohres (3) Luft eintritt, daß ein zweites Bypassrohr (19) zwischen den Resonanzbehältern (1, 2) verlegt ist, und daß das Bypassrohr (19) und das Verbindungsrohr (3) durch Drosselklappen (22, 23) bzw. (24, 25) verschließbar sind.

4. Luftansauganlage nach Anspruch 3, dadurch gekennzeichnet, daß die Drosselklappen (22, 23, 24, 25) am Verbindungsrohr (3) und an dem Bypassrohr (19) jeweils an beiden Rohrseiten nahe den Einmündungsstellen in die Resonanzbehälter (1, 2) angeordnet sind.

5. Luftansauganlage nach den Ansprüchen 3 und 4, dadurch gekennzeichnet, daß die Drosselklappen so eingestellt werden, daß im unteren Drehzahlbereich Luft lediglich über das eine Bypassrohr (18) den Resonanzbehältern (1, 2) zugeführt wird, daß im mittleren Drehzahlbereich das Verbindungsrohr (3), im oberen Drehzahlbereich auch das zweite Bypassrohr (19) jeweils durch Öffnen der zugehörigen Drosselklappen zugeschaltet wird, wobei der resonanzwirksame Querschnitt und das Gesamtvolumen der Luftansauganlage verändert werden.

6. Luftansauganlage nach einem der Ansprüche 1 bis 5, dadurch gekennzeichnet, daß jeder der beiden Resonanzbehälter (1, 2) etwa das gleiche Volumen hat wie das Verbindungsrohr (3) und das kleinere Bypassrohr (18) einschließlich ihrer Saugstutzen zusammen.

### Claims

1. An air intake arrangement between the two rows of cylinders of a multi-cylinder internal combustion engine with an l-shaped distribution member (4) adapted for pulse super-charging and comprising two resonance containers (1, 2) and a connecting pipe (3), wherein individual suction pipes (8) lead from the resonance containers to the cylinders and a suction union (5) controllable by a throttle valve (6) opens perpendicularly and substantially centrally into the connecting pipe (3), characterised in that at least one bypass pipe (19) connects the resonance containers (1, 2) in parallel, in terms of flow, with the connecting pipe (3), the flow cross-section of the bypass pipe (19) being variable during operation of the internal combustion engine.

2. An air intake arrangement according to Claim 1, characterised in that at least one of the bypass pipes is smaller in cross-section than the connecting pipe (3).

3. An air intake arrangement according to Claim 1, characterised in that one bypass pipe (18) comprises a suction union (20) controllable by a throttle valve (21) through which air enters parallel to the suction union (5) of the connecting pipe (3), in that a second bypass pipe (19) is arranged between the resonance containers (1, 2) and in that the bypass pipe (19) and the connecting pipe (3) are closable by throttle valves (22, 23) or (24, 25).

4. An air intake arrangement according to Claim 3, characterised in that the throttle valves (22, 23, 24, 25) are arranged, respectively, at each end of the connecting pipe (3) and the bypass tube (19) in the vicinity of the inlets into the resonance containers (1, 2), respectively.

5. An air intake arrangement according to Claims 3 and 4, characterised in that the throttle valves are adjustable such that, in the lower speed range, air is merely supplied via one bypass pipe (18) to the resonance containers (1, 2), in that, in the mid-speed range, the connecting pipe (3) and, in the upper speed range, also the second bypass pipe (19) are each connected by opening the respective throttle valves, whereby the resonant cross-section and the total volume of the air intake arrangement is varied.

6. An air intake arrangement according to Claims 1 to 5, characterised in that each of the two resonance containers (1, 2) has substantially the same volume as the connecting pipe (3) and the smaller bypass pipe (18) including its suction union.

### Revendications

1. Installation d'aspiration d'air entre les deux rangées de cylindres d'un moteur à combustion interne à plusieurs cylindres comportant un répartiteur (4) en forme de I réglé pour une suralimentation oscillante constitué de deux cavités résonnantes (1, 2) et un conduit de liaison (3), des tuyaux d'aspiration individuels (8) partant des cavités résonnantes et allant aux cylindres, et un embout d'aspiration (5) pouvant être commandé par un papillon des gaz (6) débouchant dans le conduit de liaison (3) perpendiculairement et sensiblement au milieu, caractérisée en ce que, parallèlement au conduit de liaison (3) est placé dans le sens de l'écoulement au moins un conduit de dérivation (19) reliant les cavités résonnantes (1, 2), conduit dont on peut faire varier la section de passage pendant le fonctionnement du moteur à combustion interne.

2. Installation d'aspiration d'air selon la revendication 1, caractérisée en ce qu'au moins un des conduits de dérivation est, en section transversale, plus petit que le conduit de liaison (3).

3. Installation d'aspiration d'air selon la revendication 1, caractérisée en ce que l'un des conduits de dérivation (18) comporte un embout d'aspiration (20) pouvant être commandé par un papillon des gaz (21), embout par lequel l'air entre parallèlement à l'embout d'aspiration (5) du conduit de liaison (3), en ce qu'un deuxième conduit de dérivation (19) est placé entre les cavités résonnantes (1, 2), et en ce que le conduit de dérivation (19) et le conduit de liaison (3) peuvent être fermés par des papillons des gaz (22, 23) et (24, 25).

4. Installation d'aspiration d'air selon la revendication 3, caractérisée en ce que les papillons des gaz (22, 23, 24, 25) sur le conduit de liaison (3) et sur le conduit de dérivation (19) sont disposés respectivement sur les deux côtés des tuyaux près des endroits où ils débouchent dans les cavités résonnantes (1, 2).

5. Installation d'aspiration d'air selon les revendications 3 et 4, caractérisée en ce que les papillons des gaz sont réglés de telle sorte que, dans la plage des basses vitesses de rotation, l'air est simplement amené par un des conduits de dérivation (18) aux cavités résonnantes (1, 2), en ce que, dans la plage des vitesses moyennes de rotation, le conduit de liaison (3), et dans la plage des vitesses de rotation élevées le second conduit de dérivation (19), sont respectivement mis en circuit par l'ouverture des papillons des gaz correspondants, et en ce que, ce faisant, la section transversale efficace en résonance et le volume total de l'installation d'aspiration d'air sont modifiés.

6. Installation d'aspiration d'air selon l'une des revendications 1 à 5, caractérisée en ce que chacune des deux cavités résonnantes (1, 2) a sensiblement le même volume que le conduit de liaison (3) et le plus petit des conduits de dérivation (18), y compris leurs embouts d'aspiration.